(19) **Europäisches Patentamt / European Patent Office / Office européen des brevets**

(11) **EP 3 268 626 B1**

(12) **FASCICULE DE BREVET EUROPEEN**

(45) Date de publication et mention
de la délivrance du brevet:
**03.04.2019 Bulletin 2019/14**

(21) Numéro de dépôt: **16706667.9**

(22) Date de dépôt: **29.02.2016**

(51) Int Cl.:
**F16C 21/00** *(2006.01)*

(86) Numéro de dépôt international:
**PCT/EP2016/054214**

(87) Numéro de publication internationale:
**WO 2016/142197 (15.09.2016 Gazette 2016/37)**

(54) **ASSEMBLAGE DE GUIDAGE HYBRIDE ET ENSEMBLE INTEGRANT UN TEL ASSEMBLAGE**

HYBRIDE FÜHRUNGSANORDNUNG UND EINHEIT MIT EINER DERARTIGEN ANORDNUNG

HYBRID GUIDE ASSEMBLY AND UNIT INCORPORATING SUCH AN ASSEMBLY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.03.2015 FR 1552017**

(43) Date de publication de la demande:
**17.01.2018 Bulletin 2018/03**

(73) Titulaire: **NTN-SNR Roulements
74000 Annecy (FR)**

(72) Inventeur: **PAQUIEN, Marc
74290 TALLOIRES (FR)**

(74) Mandataire: **Alatis
109 Bd Haussmann
75008 Paris (FR)**

(56) Documents cités:
**DE-A1- 2 159 455        DE-A1- 2 359 389
DE-A1-102006 029 151    JP-A- 2005 163 656
US-A- 3 708 215**

Printed by Jouve, 75001 PARIS (FR)

**Description**

## DOMAINE TECHNIQUE DE L'INVENTION

L'invention se rapporte au guidage d'un arbre en rotation autour d'un axe et, de manière préférentielle et non limitative, au guidage d'un vilebrequin de moteur thermique.

## ETAT DE LA TECHNIQUE ANTERIEURE

Pour guider le vilebrequin d'un moteur thermique en rotation dans le carter moteur, on fait généralement appel à des paliers lisses, dont la durée de vie est bien supérieure aux autres composants du moteur. Lorsque l'on souhaite réduire le frottement induit par le guidage en rotation, on est tenté de remplacer au moins certains des paliers lisses de guidage du vilebrequin par des paliers à roulement dont les performances en frottement sont meilleures. Mais il s'avère difficile ou très onéreux de proposer un palier à roulement dont la durée de vie soit suffisante par rapport aux autres composants du moteur.

Pour profiter à la fois de la longévité propre au palier lisse et du faible frottement caractéristique du palier à roulement, il a été proposé dans le document JP2009019728 de combiner un palier à roulement à contact oblique et un palier lisse, en introduisant un actionneur capable de faire varier le positionnement axial relatif des bagues du palier à roulement. Dans la mesure où le jeu radial d'un palier à roulement à contact oblique est proportionnel au jeu axial, on peut ainsi piloter grâce à l'actionneur le jeu radial du palier à roulement: lorsque le jeu radial du palier à roulement est plus faible que le jeu radial du palier lisse, le vilebrequin est guidé en rotation uniquement par le palier à roulement. Lorsqu'il est plus important, c'est le palier lisse qui devient seul élément de guidage. Mais ce dispositif nécessite un actionneur pour piloter l'engagement et le désengagement du roulement à contact oblique, d'où un encombrement axial important, un coût élevé et une complexité importante pour le contrôle moteur.

## EXPOSE DE L'INVENTION

L'invention vise à remédier aux inconvénients de l'état de la technique et à proposer un assemblage permettant de tirer parti des avantages respectifs d'un palier lisse et d'un palier à roulement, par des moyens simples adaptés à la production en grande série.

Pour ce faire est proposé, selon un premier aspect de l'invention, un assemblage de guidage hybride comportant au moins un palier à roulement et au moins un palier lisse définissant un axe de révolution commun, le palier à roulement comportant au moins un chemin de roulement intérieur tourné radialement vers l'extérieur, au moins un chemin de roulement extérieur tourné radialement vers l'intérieur en regard du chemin de roulement intérieur et des corps roulants circulant sur le chemin de roulement intérieur et le chemin de roulement extérieur, le palier à roulement présentant un jeu résiduel de fonctionnement fonction d'une température de fonctionnement dans une plage de températures prédéterminée, le palier lisse comportant au moins une piste de glissement et au moins un manchon situé radialement en regard et à distance de la piste de glissement de manière à constituer un jeu fonctionnel JL entre la piste de glissement et le manchon fonction de la température de fonctionnement dans la plage de températures prédéterminée, la piste de glissement étant fixe en rotation par rapport à l'un des chemins de roulement intérieur ou extérieur, le manchon étant fixe en rotation par rapport à un autre des chemins de roulement intérieur ou extérieur. Selon l'invention, le manchon a un coefficient de dilatation radiale thermique tel que la différence algébrique entre le jeu résiduel de fonctionnement du palier à roulement et le jeu fonctionnel augmente en passant de valeurs négatives à des valeurs positives lorsque la température de fonctionnement augmente dans la plage de températures prédéterminée.

L'invention permet donc, sans faire appel à un actionneur extérieur, de moduler l'intervention du palier à roulement et du palier lisse en fonction de la température. En choisissant un manchon ayant un coefficient de dilatation radiale thermique tel que lorsque la température augmente, la différence entre le jeu résiduel de fonctionnement du palier à roulement et le jeu fonctionnel du palier lisse augmente, on crée plusieurs plages de fonctionnement dans la plage de températures prédéterminée: à basse température, en deçà d'un premier seuil de température, le jeu fonctionnel entre manchon et piste de glissement est supérieur au jeu résiduel de fonctionnement du palier à roulement, et la fonction de guidage en rotation est assurée de façon prépondérante par le palier à roulement. Lorsque la température est élevée, au-delà d'un deuxième seuil de température, la différence entre le jeu résiduel de fonctionnement du palier et le jeu fonctionnel entre manchon augmente de façon telle que le palier lisse assure le guidage en rotation. La transition entre le premier seuil de température et le deuxième seuil de température correspond à un fonctionnement en parallèle des deux paliers. La plage correspondante peut être plus ou moins importante. Par exemple, pour une application à un moteur thermique de véhicule, on peut choisir le coefficient de dilatation radiale thermique de manière que le premier seuil soit à 70°C et le deuxième à 85°C, sachant que le refroidissement du moteur est régulé pour une température nominale proche de 90°C. Le premier et le deuxième seuil peuvent être confondus ou pratiquement confondus.

Dans le cadre de la présente demande, le coefficient de dilatation radiale thermique du manchon se définit comme le rapport entre la variation de dimension radiale du manchon et la variation de température correspondante, qui fait intervenir le ou les coefficients de dilatation thermique du ou des matériaux constitutifs du manchon, mais également des considérations de forme de la pièce constitutive du manchon. De même, le coefficient de dilatation radiale des corps roulants se définit comme le rapport entre la variation de dimension radiale des corps roulants et la variation de température correspondante, qui fait intervenir le coefficient de dilatation thermique du ou des matériaux constitutifs des corps roulants, et l'épaisseur radiale de matière des corps roulants. Naturellement, les variations du jeu fonctionnel et du jeu résiduel de fonctionnement ne sont pas dues qu'aux seules dilatations thermiques des corps roulants et du manchon, mais également des autres pièces de l'assemblage, le choix judicieux du coefficient de dilatation radiale thermique du manchon étant fait pour un assemblage donné.

Suivant un mode de réalisation préféré, le palier à roulement comporte au moins une bague extérieure sur laquelle est formé le chemin de roulement extérieur. La bague extérieure est de préférence réalisée en acier. La bague extérieure peut le cas échéant servir de support pour une partie du palier lisse, formant ainsi un module structurel unitaire que l'on peut qualifier de palier hybride. Suivant une première variante, le manchon est fretté dans la bague extérieure. Cette solution sera préférée lorsque l'on souhaite que la piste de glissement soit tournée radialement vers l'extérieur et positionnée radialement à proximité du chemin de roulement intérieur. On peut avantageusement prévoir que la bague extérieure forme un épaulement d'arrêt axial du manchon. Alternativement, la piste de glissement est formée sur la bague extérieure et tournée radialement vers l'intérieur.

Suivant un mode de réalisation particulièrement avantageux, est formé sur la bague extérieure un chemin de roulement extérieur additionnel, le manchon étant positionné axialement entre le chemin de roulement extérieur et le chemin de roulement extérieur additionnel. On définit ainsi un module dont le roulement a deux rangées de corps roulants, le palier lisse venant s'intercaler entre les deux rangées de corps roulants.

Suivant un autre mode de réalisation le palier à roulement comporte au moins une bague extérieure additionnelle sur laquelle est formé un chemin de roulement extérieur additionnel, le manchon étant positionné axialement entre le chemin de roulement extérieur et le chemin de roulement extérieur additionnel.

De façon plus générale, le palier à roulement comporte de préférence au moins une bague intérieure sur laquelle est formé le chemin de roulement intérieur. L'alternative consistant à former le chemin de roulement intérieur directement sur l'arbre est également possible, mais ne permet pas un préassemblage du palier à roulement, et la maîtrise des caractéristiques dimensionnelles du palier à roulement, particulièrement critique pour l'obtention des comportements de dilatation thermique souhaités. La bague intérieure est de préférence réalisée en acier. La bague intérieure peut le cas échéant servir de support pour une partie du palier lisse, formant ainsi un module structurel unitaire que l'on peut qualifier de palier hybride. Suivant une première variante, le manchon est fretté sur la bague intérieure. Cette solution sera préférée lorsque l'on souhaite que la piste de glissement soit tournée radialement vers l'intérieur et positionnée radialement à proximité du chemin de roulement extérieur. On peut alors prévoir que la bague intérieure forme un épaulement d'arrêt axial du manchon, pour assurer un positionnement précis et durable du manchon.

Suivant un autre mode de réalisation, la piste de glissement est formée sur bague intérieure et tournée radialement vers l'extérieur.

Pour autant que l'assemblage comporte à la fois une bague intérieure et une bague extérieure, le chemin de roulement intérieur est situé en regard du chemin de roulement extérieur.

Suivant un mode de réalisation particulièrement avantageux, est formé sur la bague intérieure un chemin de roulement intérieur additionnel, le manchon étant positionné axialement entre le chemin de roulement intérieur et le chemin de roulement intérieur additionnel.

Alternativement, le palier à roulement comporte au moins une bague intérieure additionnelle sur laquelle est formé un chemin de roulement intérieur additionnel, le manchon étant positionné axialement entre le chemin de roulement intérieur et le chemin de roulement intérieur additionnel.

Pour autant qu'il existe une bague formant un chemin de roulement intérieur additionnel et une bague formant un chemin de roulement extérieur additionnel, le chemin de roulement extérieur additionnel est situé en regard du chemin de roulement intérieur additionnel.

Suivant un mode de réalisation, le palier lisse comporte au moins deux manchons situés axialement de part et d'autre du chemin de roulement extérieur et du chemin de roulement intérieur. Pour constituer un module hybride, on peut prévoir une bague extérieure sur laquelle est formé le chemin de roulement extérieur, une bague intérieure sur laquelle est formé le chemin de roulement intérieur, les manchons étant solidaires d'une des deux bagues intérieure ou extérieure, les pistes de glissement étant formées sur l'autre des deux bagues intérieure ou extérieure.

Suivant un mode de réalisation le manchon comporte un anneau de dilatation en ayant un coefficient de dilatation thermique supérieur à $18.10^{-6}$ $K^{-1}$, de préférence un anneau en alliage léger, de préférence en alliage d'aluminium.

Suivant un mode de réalisation le manchon comporte un anneau d'armature en acier entourant l'anneau de dilatation. L'anneau d'armature permet de maîtriser la déformation thermique de l'anneau de dilatation dans la plage de température prédéterminée indépendamment d'éventuelles déformations thermiques du support du manchon, qui peut être lui-même en alliage léger.

Suivant un mode de réalisation, le palier lisse comporte une bague de glissement sur laquelle est formée la piste de glissement. La bague de glissement peut avantageusement être réalisée en acier. Elle permet une fabrication maîtrisée du palier lisse, avant son montage sur un arbre. Alternativement, la piste de glissement peut être directement réalisée sur l'arbre.

De préférence, le palier à roulement comporte des corps roulants en acier et des chemins de roulement intérieur et extérieur en acier. Alternativement les corps roulants peuvent être en céramique, notamment en nitrure de silicium, et les chemins de roulement en acier ou également en céramique.

Suivant un au aspect de l'invention, celle-ci a trait à un ensemble comportant un assemblage de guidage hybride tel que décrit précédemment, ainsi qu'un arbre et un bâti, le chemin de roulement intérieur étant fixe par rapport à l'arbre, le chemin de roulement extérieur étant fixe par rapport au bâti. Le chemin de roulement intérieur peut être formé directement sur l'arbre, ou formé sur une bague de roulement intérieure rapportée, sur l'arbre. Le chemin de roulement extérieur est de préférence formé sur une bague extérieure, comme discuté précédemment, mais peut alternativement être formé directement sur le bâti. La piste de glissement est fixe par rapport à l'arbre ou fixe par rapport au bâti. Suivant une première variante, la piste de glissement est formée sur le bâti et tournée radialement vers l'intérieur. Suivant une autre variante, la piste de glissement est formée sur l'arbre et tournée radialement vers l'extérieur. Alternativement, la piste de glissement peut être formée sur une bague du palier à roulement, comme discuté précédemment.

Suivant un mode de réalisation particulièrement avantageux, le bâti est un carter renfermant un bain d'huile dans lequel baignent le palier à roulement et le palier lisse. L'huile assure la lubrification des paliers, et en particulier la constitution d'un film d'huile entre le manchon et la piste de glissement. Elle constitue également un fluide caloporteur favorisant une circulation de la chaleur par convection dans le carter, et une uniformisation rapide des températures lors des phases transitoires de montée ou de descente en température. De préférence, l'ensemble comporte en outre un échangeur thermique de régulation thermique du bain d'huile. L'échangeur thermique comprend d'une part un circuit de circulation de l'huile du bain d'huile et d'autre part un circuit de fluide caloporteur extérieur au carter, refroidi par exemple par un radiateur.

Suivant un mode de réalisation préféré, l'arbre est un vilebrequin. Suivant une première variante, le vilebrequin comporte au moins deux manivelles adjacentes, le palier à roulement et le palier lisse étant positionnés entre les deux manivelles adjacentes. Alternativement, le vilebrequin comporte des manivelles, le palier à roulement et le palier lisse étant positionnés à une extrémité du vilebrequin, d'un même côté des manivelles. On peut par ailleurs envisager d'équiper de manière similaire les deux extrémités du vilebrequin, voire les extrémités et la portion intermédiaire.

Suivant un autre aspect de l'invention, celle-ci a trait à un module de guidage pour guider un arbre en rotation par rapport à un bâti, le module comportant au moins un palier à roulement et au moins un palier lisse, le palier à roulement comportant au moins une bague intérieure sur laquelle est formé au moins un chemin de roulement intérieur tourné radialement vers l'extérieur, au moins une bague extérieure sur laquelle est formé au moins un chemin de roulement extérieur tourné radialement vers l'intérieur et des corps roulants circulant sur le chemin de roulement intérieur et le chemin de roulement extérieur, le palier lisse comportant au moins un manchon situé radialement en regard et à distance d'au moins une piste de glissement formé sur la bague intérieure ou sur la bague extérieure de manière à constituer un jeu fonctionnel entre la piste de glissement et le manchon, caractérisé en ce que le manchon a un coefficient de dilatation radiale thermique supérieur à un coefficient de dilatation radiale thermique des corps roulants du palier à roulement, et/ou des bagues intérieures et/ou extérieures, et/ou du carter.

**BREVE DESCRIPTION DES FIGURES**

D'autres caractéristiques et avantages de l'invention ressortiront à la lecture de la description qui suit, en référence aux figures annexées, qui illustrent :

- la figure 1, un assemblage de guidage hybride selon un premier mode de réalisation de l'invention;

- la figure 2, un assemblage de guidage hybride selon un deuxième mode de réalisation de l'invention;

- la figure 3, un assemblage de guidage hybride selon un troisième mode de réalisation de l'invention;

- la figure 4, un assemblage de guidage hybride selon un quatrième mode de réalisation de l'invention;

- la figure 5, un assemblage de guidage hybride selon un cinquième mode de réalisation de l'invention;

- la figure 6, un assemblage de guidage hybride selon un sixième mode de réalisation de l'invention;

- la figure 7, un assemblage de guidage hybride selon un septième mode de réalisation de l'invention;

- la figure 8, un assemblage de guidage hybride selon un huitième mode de réalisation de l'invention;

- la figure 9, un diagramme schématique illustrant les variations de différents jeux de fonctionnement d'un assemblage de guidage hybride selon l'un quelconque des modes de réalisation précédents à carter en acier, en fonction de la température;

- la figure 10, un diagramme schématique illustrant les variations de différents jeux de fonctionnement d'un assemblage de guidage hybride selon l'un quelconque des modes de réalisation précédents à carter en aluminium, en fonction de la température;

- la figure 11 illustre de façon schématique une partie d'un moteur à combustion interne équipé d'un ou plusieurs assemblages de guidage hybride selon l'invention.

Pour plus de clarté, les éléments identiques ou similaires sont repérés par des signes de référence identiques sur l'ensemble des figures.

**DESCRIPTION DÉTAILLÉE DE MODES DE REALISATION**

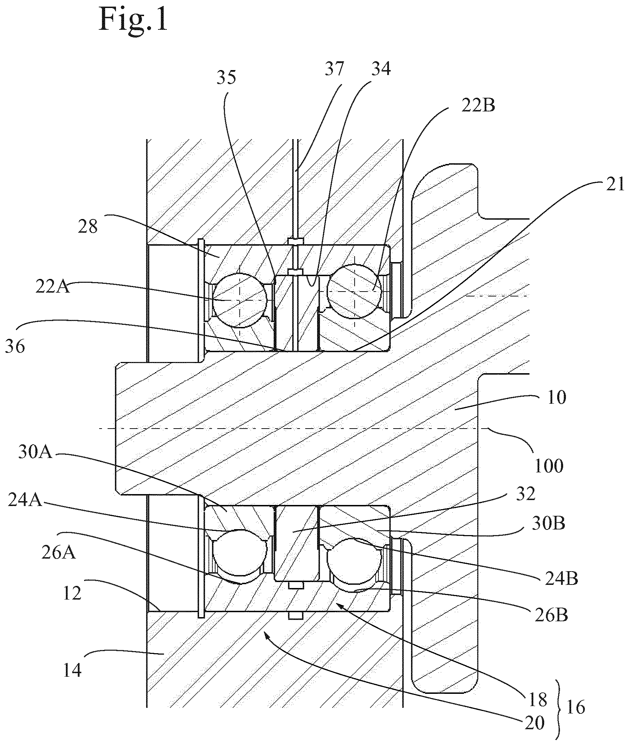

Sur la figure 1 est illustré un tronçon d'un vilebrequin **10** de moteur à combustion interne, traversant un alésage **12** d'un carter de vilebrequin **14** et guidé en rotation autour d'un axe de révolution **100** par l'intermédiaire d'un module de guidage hybride **16** comportant un palier lisse **18** et un palier à roulement **20**. L'arbre constitué par le vilebrequin **10** est en acier et peut être formé d'une seule pièce ou de façon modulaire par tronçons et forme au niveau de l'alésage **12** une portée cylindrique **21** pour le module de guidage hybride **16**. Le carter **14** peut quant à lui être en fonte de fer ou, de préférence, d'aluminium. Le carter de vilebrequin **14** contient de l'huile, dans laquelle baigne le module de guidage hybride **16**, l'huile ayant une fonction de lubrifiant et de fluide caloporteur. De façon connue, l'huile du carter de vilebrequin est régulée en température par l'intermédiaire d'un échangeur de chaleur (non représenté), par exemple un échangeur à deux étages comportant un échangeur primaire couplant thermiquement l'huile du carter de vilebrequin à un circuit intermédiaire de liquide de refroidissement, et un échangeur secondaire entre le liquide de refroidissement et l'air ambiant.

Dans l'exemple considéré, le palier à roulement **20** est un palier à deux rangées de corps roulants. Les corps roulants **22A, 22B** de chaque rangée roulent sur un chemin de roulement intérieur **24A, 24B** tourné radialement vers l'extérieur et un chemin de roulement extérieur **26A, 26B** tourné radialement vers l'intérieur, en regard du chemin de roulement intérieur correspondant **24A, 24B.** Les deux chemins de roulement extérieurs **26A, 26B** sont formés sur une bague extérieure commune **28** en acier frettée dans l'alésage **12.** Chaque chemin de roulement intérieur **24A, 24B** est formé sur une bague intérieure **30A, 30B** distincte frettée sur la portée cylindrique **21** de l'arbre **10.** Les corps roulants **22A, 22B** sont des billes d'acier et chaque rangée de corps roulants est à contact radial. Les chemins de roulement intérieurs **24A, 24B** et extérieurs **26A, 26B** sont rectifiés.

Le palier lisse **18** comporte un manchon **32** fretté sur une portée cylindrique **34** de la bague extérieure et arrêté axialement par un épaulement **35** formé sur la bague extérieure **28.** Le manchon **32** est situé en regard et à faible distance d'une piste de glissement **36** formée directement sur l'arbre **10,** entre les deux bagues intérieures **30A, 30B.** Un jeu fonctionnel, non visible sur les figures, permet la constitution d'un film d'huile entre la piste de glissement et le manchon lorsque le vilebrequin tourne. Au moins un canal de distribution d'huile **37** est prévu au travers du carter **14,** de la bague extérieure **28** et du manchon **32** pour créer un film d'huile entre le manchon **32** et la piste de glissement d'huile. On prévoit également un jeu entre le manchon **32** et les bagues intérieures **30A, 30B** pour permettre à l'huile sous pression d'alimenter le palier à roulement **20,** Alternativement, on peut prévoir des rainures radiales sur le manchon **32** ou sur les faces en regard des bagues intérieures **30A, 30B** pour former des canaux de passage pour l'huile sous pression. De manière remarquable, le manchon **32** est réalisé en un matériau ayant un coefficient de dilatation significativement plus élevé que les aciers constitutifs des corps roulants et des bagues de roulement, de préférence supérieur à $18.10^{-6}$ $K^{-1}$. En l'occurrence, le manchon **32** est ici un anneau en alliage d'aluminium. La piste de glissement **36** et la face du manchon qui lui fait face sont rectifiées. On peut le cas échéant prévoir un chemisage de la piste de glissement **36**, de la face intérieure du manchon **32** ou des deux, avec un revêtement améliorant le glissement. On peut également prévoir que le manchon soit constitué en deux pièces, à savoir une pièce massive et un coussinet fretté sur cette pièce massive, directement en regard de la piste de glissement **36**.

Le module hybride **16** ainsi constitué est dimensionné pour avoir un comportement variable avec la température. La fonte d'aluminium constitutive du carter **14** ayant un coefficient de dilatation thermique plus élevé que l'acier constitutif de la bague extérieure **28**, les contraintes dans la bague extérieure **28** induites par le frettage de la bague **28** dans alésage **12** diminuent lorsque la température augmente, et les diamètres intérieurs au niveau des chemins de roulement **26A, 26B** et de la portée cylindrique **34** augmentent. Il en résulte que le palier à roulement **20** présente un jeu résiduel de fonctionnement, c'est-à-dire un jeu de fonctionnement après montage entre les corps roulants **22A, 22B** et les chemins de roulement intérieurs **24A, 24B** et extérieurs **26A, 26B,** qui augmente avec la température de fonctionnement dans la plage de températures de fonctionnement. Le jeu fonctionnel du palier lisse **18,** entre le manchon **32** et la piste de glissement **36,** varie également en fonction de la température. Dans la mesure où le coefficient de dilatation thermique du matériau constitutif du manchon **32** est significativement plus élevé que celui de l'acier des corps roulants **22A, 22B,** on constate que la différence algébrique entre le jeu résiduel de fonctionnement du palier à roulement et le jeu fonctionnel du palier lisse **18** augmente significativement lorsque la température augmente, en passant de valeurs négatives à des valeurs positives dans la plage de température de fonctionnement du moteur. Plus précisément, le jeu fonctionnel du palier lisse augmente moins vite que le jeu résiduel de fonctionnement du palier à roulement **20** lorsque la température de fonctionnement augmente dans la plage de températures prédéterminée, voire diminue alors que le jeu résiduel de fonctionnement du palier à roulement **20** augmente. Il découle de ces dilatations différentes qu'à basse température, par exemple pour une température d'huile en deçà de 70°C, le jeu fonctionnel du palier lisse **18** est important et l'essentiel de la charge radiale est supportée par le palier à roulement **20**. Inversement, à haute température, par exemple pour une température d'huile au-delà de 80°C, le jeu fonctionnel du palier lisse **18** est faible et l'essentiel de la charge radiale est supportée par le palier lisse **18**. On tire donc parti des avantages respectifs du palier à roulement **20** et du palier lisse **18**: le palier à roulement **20** assure un guidage à faible frottement à basse température, et est relayé par le palier lisse **18** dès qu'on s'approche de la température nominale de fonctionnement.

La présentation précédente a été volontairement simplifiée car les températures ne sont pas uniformes dans l'assemblage dans la phase transitoire de démarrage. Mais la présence d'un gradient de température ne modifie pas qualitativement l'effet obtenu grâce au module de guidage **16,** et notamment la prépondérance du palier à roulement **20** à basse température et la prépondérance du palier lisse **18** à la température nominale du moteur.

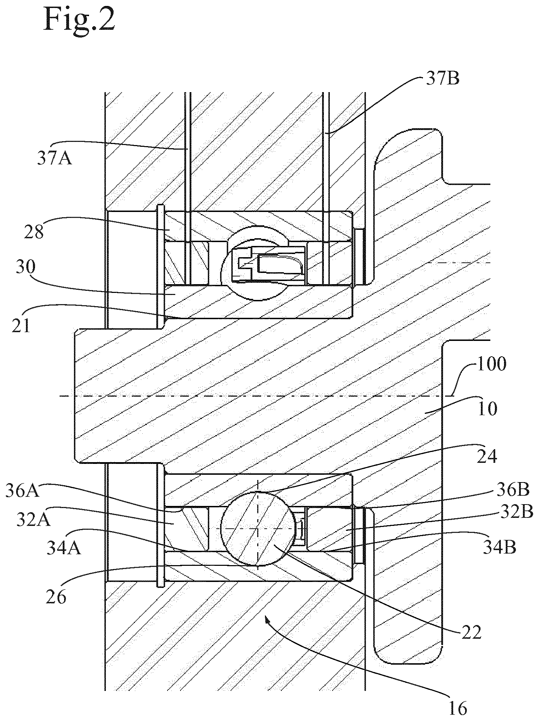

Sur la figure 2 est illustré un module de guidage hybride selon un deuxième mode de réalisation de l'invention, comportant un module de guidage hybride **16** monté entre un vilebrequin **10** en acier et un alésage **12** d'un carter de vilebrequin **14** en aluminium. Le module de guidage hybride **16** comporte un palier à roulement **20** et un palier lisse **18**. Le palier à roulement **20** est composé d'une bague extérieure **28,** d'une bague intérieure **30** et d'une rangée de billes **22** circulant sur un chemin de roulement extérieur **26** formé sur la bague extérieure **28** et un chemin de roulement intérieur **24** formé sur la bague intérieure **30**. Axialement de part et d'autre du chemin de roulement extérieur **26** sont formés sur la bague extérieure **28** deux portées cylindriques **34A, 34B** sur lesquels sont frettés deux manchons **32A, 32B**. Axialement de part et d'autre du chemin de roulement intérieur **24** sont formées sur la bague intérieure **30** deux pistes de glissement **36A, 36B** situées chacune radialement en regard et à faible distance de l'un des manchons **32A, 32B**. Des canaux **37A, 37B** permettent d'alimenter un film d'huile entre les manchons **32A, 32B** et les pistes de glissement **36A, 36B**.

Comme dans le mode de réalisation précédent, les bagues intérieure **30** et extérieure **28** sont en acier ainsi que les billes **22,** alors que les manchons **32A, 32B** sont en aluminium, le cas échéant pourvus d'un revêtement de la face en regard des pistes de glissement **36A, 36B,** ou équipés de coussinets de glissement. Du fait des différences de coefficients de dilatation thermique des matériaux, le jeu fonctionnel entre les manchons **32A, 32B** et les pistes de glissement **36A, 36B** augmente moins vite que le jeu résiduel de fonctionnement du palier à roulement **20**. Il s'en déduit le même fonctionnement évolutif en fonction de la température de fonctionnement dans la plage de fonctionnement du moteur.

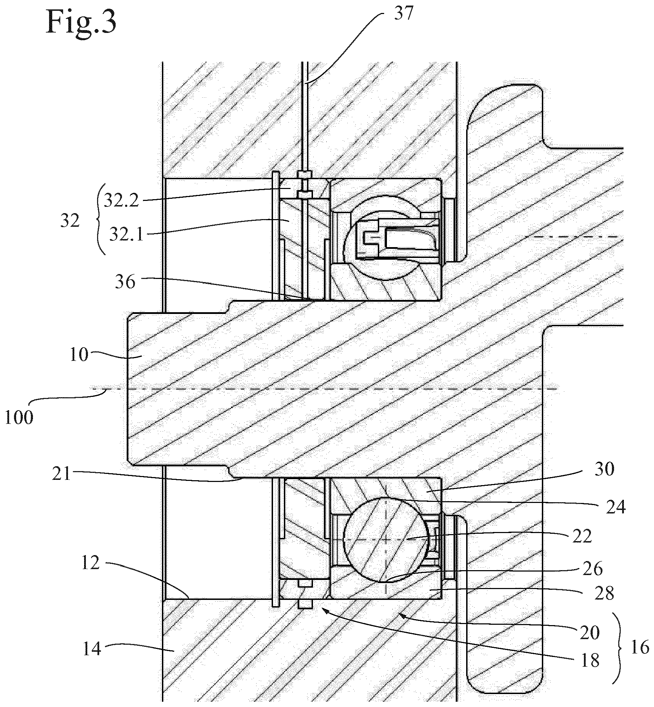

Sur la figure 3 est illustré un assemblage de guidage hybride selon un troisième mode de réalisation de l'invention entre un vilebrequin **10** et un carter de vilebrequin **14** en fonte d'aluminium, par l'intermédiaire d'un palier à roulement **20** et d'un palier lisse **18** disposés côte à côte dans un même alésage **12** du carter de vilebrequin **14**. Le palier à roulement **20** est un roulement conventionnel à billes à une rangée de billes **22** roulant sur un chemin de roulement intérieur **24** formé sur une bague intérieure **30** et un chemin de roulement extérieur **26** formé sur une bague extérieure **28**. Le palier lisse **18** n'a pas de composant commun avec le palier à roulement **20** et comporte un manchon **32** composé d'un anneau intérieur **32**.1 en aluminium cerclé par un anneau extérieur d'armature **32**.2 en acier fretté dans l'alésage **12,** l'anneau intérieur **32.1** étant situé en regard et à distance d'une piste de glissement **36** formée directement sur l'arbre. Le jeu entre le manchon **32** et la piste de glissement **36** est suffisant pour établir un film d'huile lorsque l'arbre tourne. Le comportement de l'assemblage en fonction de la température est similaire à celui des modes de réalisation précédents. Le cerclage réalisé par l'anneau extérieur d'armature **32**.2 du manchon permet d'assurer la réduction recherchée du jeu fonctionnel du palier lisse, indépendamment d'une éventuelle dilatation thermique du carter de vilebrequin **14** en fonte d'aluminium.

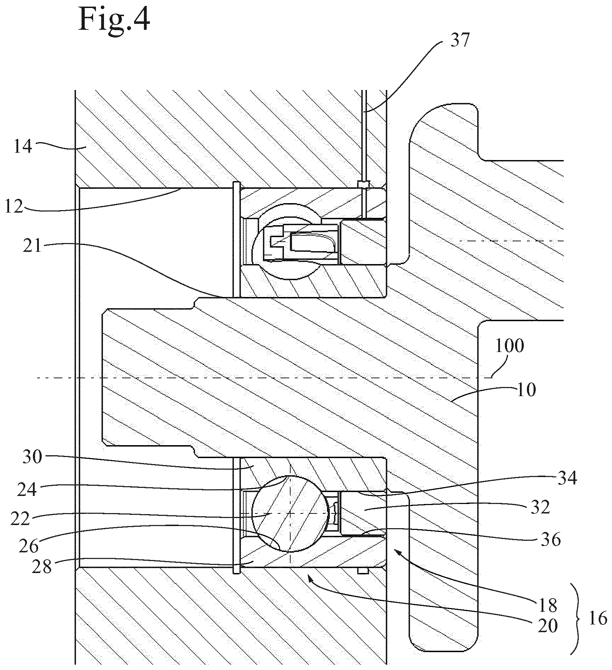

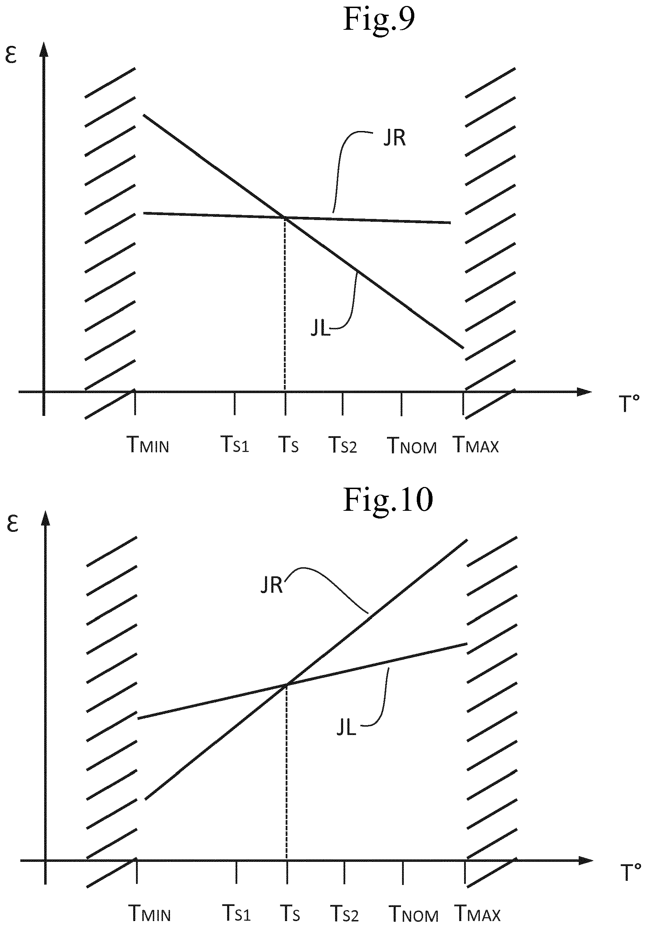

Sur la figure 4 est illustré un module de guidage hybride selon un quatrième mode de réalisation présentant un module hybride **16** comportant un palier à roulement **20** à une rangée de billes **22** et un palier lisse à un manchon **32**. Le manchon est fretté sur une portée **34** formée sur la bague intérieure **30** du palier à roulement, axialement d'un côté du chemin de roulement intérieur **24**. Une piste de glissement **36** est formée sur la bague extérieure **28** axialement d'un côté du chemin de roulement extérieur **26**. Ce module peut être destiné à un carter en aluminium ou fonte de fer. Comme il sera discuté plus loin à propos des figures 9 et 10, le comportement des éléments du module hybride diffère dans les deux cas, mais le comportement du module pris dans son ensemble reste comparable, dans la mesure où, sur la plage de température de fonctionnement, la différence algébrique entre le jeu résiduel de fonctionnement du roulement et le jeu fonctionnel du palier lisse augmente continument avec la température.

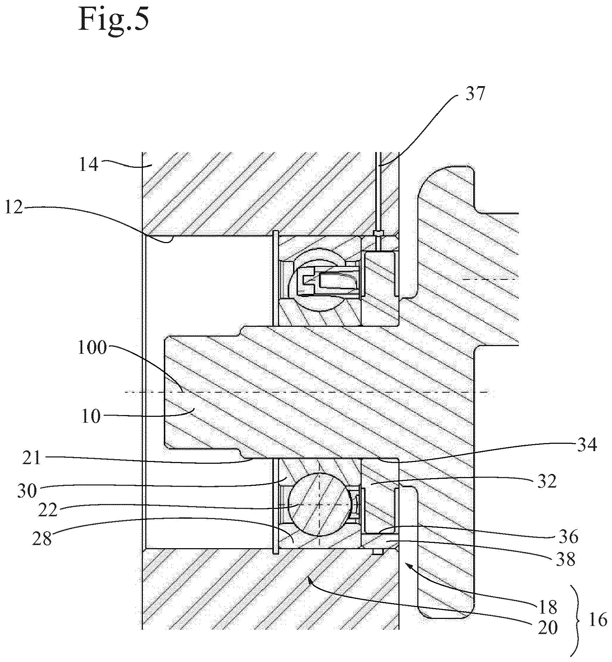

Sur la figure 5 est illustré un assemblage de guidage hybride selon un cinquième mode de réalisation de l'invention, apparenté au mode de réalisation de la figure 3 et qui diffère de ce dernier par l'implantation du palier lisse **18**. Celui-ci comporte une bague de glissement **38** en acier frettée dans l'alésage **12** du carter **14** en fonte d'aluminium ou en alliage léger, et un manchon **32** en aluminium fretté sur une portée cylindrique **34** formée sur le vilebrequin **10.** Le manchon **32** est positionné en regard et à faible distance d'une piste de glissement **36** formée sur la bague de glissement **38.** Le jeu fonctionnel entre le manchon **32** et la bague de glissement **38** permet la constitution d'un film d'huile lorsque le vilebrequin **10** tourne.

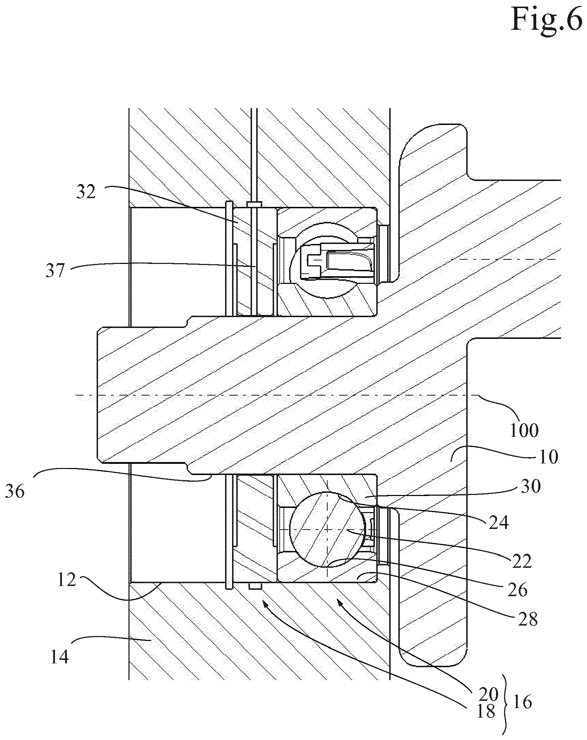

Sur la figure 6 est illustré un assemblage de guidage hybride simplifié applicable à un carter **14** en fonte de fer, donc à faible coefficient de dilatation thermique. Dans un tel cas, il est possible, en variante du mode de réalisation de la figure 3, de prévoir un manchon **32** entièrement en aluminium, fretté directement dans l'alésage **12** du carter **14.** L'armature d'acier **32.2** prévue dans le mode de réalisation de la figure 3 n'est pas nécessaire si l'on a une bonne maîtrise de l'alésage et du comportement en dilatation. Comme dans le mode de réalisation de la figure 3, on constitue un film d'huile dynamique entre le manchon **32** et une piste de glissement **36** directement formée sur le vilebrequin **10.**

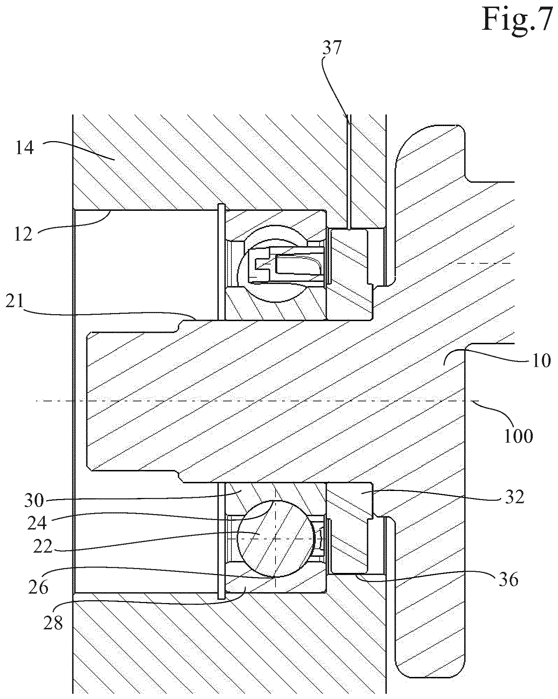

Sur la figure 7 est illustré un assemblage de guidage hybride simplifié apparenté au mode de réalisation de la figure 5 mais destiné à un carter **14** en fonte de fer. Le mode de réalisation de la figure 7 se distingue de celui de la figure 5 par la disparition de la bague de glissement **38,** la piste de glissement **36** étant directement réalisée dans l'alésage **12** du carter **14.**

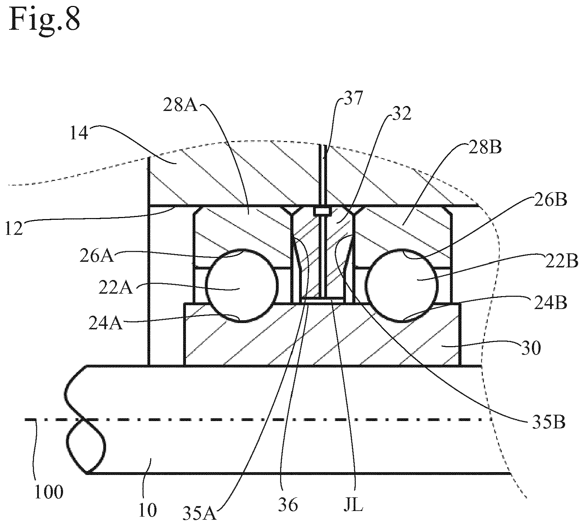

Sur la figure 8 est illustré un module de guidage hybride selon un huitième mode de réalisation. Le palier à roulement **20** est, comme dans le premier mode de réalisation, un palier à deux rangées de corps roulants. Les corps roulants **22A, 22B** de chaque rangée roulent sur un chemin de roulement intérieur **24A, 24B** tourné radialement vers l'extérieur et un chemin de roulement extérieur **26A, 26B** tourné radialement vers l'intérieur, en regard du chemin de roulement intérieur correspondant **24A, 24B.** Les deux chemins de roulement extérieurs **26A, 26B** sont formés sur deux bagues extérieures **28A, 28B** en acier frettée dans l'alésage **12.** Les deux chemins de roulement intérieur **24A, 24B** sont formés sur une bague intérieure commune **30** frettée sur la portée cylindrique **21** de l'arbre **10.** Les corps roulants **22A, 22B** sont des billes d'acier et chaque rangée de corps roulants est à contact radial. Les chemins de roulement intérieurs **24A, 24B** et extérieurs **26A, 26B** sont rectifiés.

Le palier lisse **18** comporte un manchon **32** fretté dans l'alésage **12** et arrêté axialement par les faces des bagues extérieures **28A, 28B** formant des épaulements **35A, 35B.** Le manchon **32** est situé en regard et à faible distance d'une piste de glissement **36** formée sur la bague intérieure **30,** entre les deux chemins de roulement intérieurs **24A, 24B.** Un jeu fonctionnel JL, que l'on a ici volontairement exagéré pour le rendre visible, permet la constitution d'un film d'huile entre la piste de glissement **36** et le manchon **32** lorsque le vilebrequin tourne. Un canal de distribution d'huile **37** est prévu au travers du carter **14,** de la bague extérieure **28** et du manchon **32** pour créer un film d'huile entre le manchon **32** et la piste de glissement d'huile. Comme dans les modes de réalisation précédents, le manchon **32** est réalisé en un matériau ayant un coefficient de dilatation significativement plus élevé que les aciers constitutifs des corps roulants et des bagues de roulement, de préférence supérieur à $18.10^{-6}$ K$^{-1}$. En l'occurrence, le manchon **32** est ici un anneau en alliage d'aluminium. La piste de glissement **36** est rectifiée et la face du manchon qui lui fait face porte un revêtement favorisant le glissement. On peut également prévoir que le manchon soit constitué en deux pièces, à savoir une pièce massive et un coussinet fretté sur cette pièce massive, directement en regard de la piste de glissement **36.**

Sur la figure 9 est illustrée de manière schématique la variation du jeu fonctionnel JL du palier lisse entre manchon et piste de glissement et la variation du jeu résiduel de fonctionnement JR du palier à roulement, en fonction de la température T de l'huile dans un carter en acier de vilebrequin dans des conditions idéales d'équilibre thermique. La température varie dans une plage de température prédéterminée entre une température minimale $T_{MIN}$, par exemple -30°C et une température maximale $T_{MAX}$, par exemple +150°C. La température de l'huile dans le carter de vilebrequin étant régulée, il existe une température nominale $T_{NOM}$ dépendant de la régulation, par exemple de 90°. Comme expliqué précédemment, le jeu fonctionnel du palier lisse JL diminue plus rapidement que le jeu résiduel de fonctionnement du palier à roulement JR lorsque la température augmente. En deçà d'un seuil de température $T_S$, le jeu fonctionnel JL du palier lisse est plus important que le jeu résiduel de fonctionnement JR du palier à roulement. Au-delà de ce seuil de température $T_S$, le jeu résiduel de fonctionnement du palier à roulement est plus important que le jeu fonctionnel du palier lisse. Le seuil de température $T_S$ en question est inférieur à la température nominale régulée de l'huile du carter de vilebrequin, de préférence inférieur d'au moins 5°C à la température nominale et de préférence pas inférieur de plus de 15° à la température nominale:

$$T_{NOM} - \mathbf{15}° \leq T_S \leq T_{NOM} - 5°$$

De part et d'autre de la température seuil $T_S$, on peut définir empiriquement une première température de seuil $T_{S1}$ et une deuxième température de seuil $T_{S2}$, tels que pour des températures inférieures au seuil $T_{S1}$ la charge induite par la rotation du vilebrequin est transmise essentiellement au palier à roulement et que pour des températures supérieures au seuil $T_{S2}$, la charge induite par la rotation du vilebrequin est transmise essentiellement au palier lisse. En pratique, la plage de températures de transition est assez étroite, de sorte que $T_{S1}$ n'est pas inférieur de plus de 5° à $T_S$ et $T_{S2}$ n'est pas supérieure à $T_S$ de plus de 5°:

$$T_S - 5° \leq T_{S1} \leq T_S$$

$$T_S \leq T_{S2} \leq T_S + 5° \leq T_{NOM}$$

Ces seuils de température et les relations entre eux ne sont donnés ici qu'à titre indicatif et pourront varier pour chaque application. Sur toute la plage de température de fonctionnement, on constate que la différence algébrique (JR-JL) augmente continument avec la température, en passant de valeurs négatives lorsque T est inférieure à $T_S$ à des valeurs positives lorsque T est supérieure à $T_S$.

Sur la figure 10 est illustrée de manière schématique la variation du jeu fonctionnel JL du palier lisse entre manchon et piste de glissement et la variation du jeu résiduel de fonctionnement JR du palier à roulement, en fonction de la température T de l'huile dans un carter en aluminium de vilebrequin dans des conditions idéales d'équilibre thermique. Comme précédemment, la température varie dans une plage de température prédéterminée entre une température minimale $T_{MIN}$, par exemple -30°C et une température maximale $T_{MAX}$, par exemple +150°C. La température de l'huile dans le carter de vilebrequin étant régulée, il existe une température nominale $T_{NOM}$ dépendant de la régulation, par exemple de 90°. Dans la mesure où le carter en aluminium se dilate lorsque la température augmente, le jeu fonctionnel du palier lisse JL et le jeu résiduel de fonctionnement du palier à roulement JR augmentent tous deux lorsque la température augmente. Toutefois, l'augmentation du jeu résiduel de fonctionnement JR du palier à roulement est plus rapide que celle du jeu fonctionnel du palier lisse, de sorte que, comme dans le cas précédent d'un carter en acier, la différence algébrique JR-JL entre le jeu résiduel de fonctionnement du palier à roulement et le jeu fonctionnel du palier lisse augmente continument avec la température, en passant de valeurs négative en deçà d'un seuil de température $T_S$, à des valeurs positive au-delà du seuil de température $T_S$. Comme précédemment, le seuil de température $T_S$ en question est inférieur à la température nominale régulée de l'huile du carter de vilebrequin, de préférence inférieur d'au moins 5°C à la température nominale et de préférence pas inférieur de plus de 15° à la température nominale:

$$T_{NOM} - \mathbf{15°} \leq T_S \leq T_{NOM} - 5°$$

De part et d'autre de la température seuil $T_S$, on peut définir empiriquement une première température de seuil $T_{S1}$ et une deuxième température de seuil $T_{S2}$, tels que pour des températures inférieures au seuil $T_{S1}$ la charge induite par la rotation du vilebrequin est transmise essentiellement au palier à roulement et que pour des températures supérieures au seuil $T_{S2}$, la charge induite par la rotation du vilebrequin est transmise essentiellement au palier lisse. En pratique, la plage de températures de transition est assez étroite, de sorte que $T_{S1}$ n'est pas inférieur de plus de 5° à $T_S$ et $T_{S2}$ n'est pas supérieure à Ts de plus de 5°:

$$T_S - 5° \leq T_{S1} \leq T_S$$

$$T_S \leq T_{S2} \leq T_S + 5° \leq T_{NOM}$$

Ces seuils de température et les relations entre eux ne sont donnés ici qu'à titre indicatif et pourront varier pour chaque application.

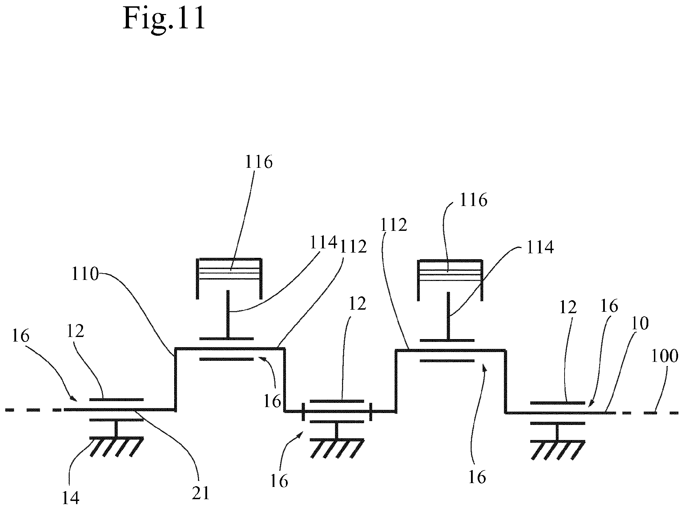

On a illustré très schématiquement sur la figure **11** une partie carter moteur **14** à l'intérieur duquel est disposé un vilebrequin **10** composé de portées de guidage **21** alignées suivant l'axe de rotation **100** du vilebrequin **10,** et de manivelles **110** portant des manetons **112** de liaison avec des bielles **114** transformant le mouvement alternatif des pistons **116** en mouvement de rotation du vilebrequin **10**. Un ou plusieurs assemblages hybrides **16** selon l'invention peuvent être positionnés, au niveau d'une ou plusieurs des portées de guidage **21** entre le vilebrequin et le carter moteur **14,** que ce soit à une extrémité du vilebrequin **14** ou dans une position intermédiaire entre les extrémités, ou bien encore au niveau des manetons **112** entre les bielles **114** et les manivelles **110**. On n'a pas illustré ici l'apport d'huile qui peut se faire de manière conventionnelle avec une arrivée par le carter au niveau des paliers principaux du vilebrequin, y compris le palier central le cas échéant, et une distribution vers les manetons par des canalisations internes du vilebrequin.

Naturellement, les exemples représentés sur les figures et discutés ci-dessus ne sont donnés qu'à titre illustratif et non limitatif. Il est explicitement prévu que l'on puisse combiner entre eux les différents modes de réalisation illustrés pour en proposer d'autres, notamment à plusieurs manchons ou plusieurs rangées de corps roulants. Le positionnement axial relatif du palier lisse **18** et du palier à roulement **20** dans les modes de réalisation à une rangée de corps roulants et un manchon peut être inversé.

Le nombre et le positionnement du ou des canaux d'alimentation en huile du ou des paliers lisses et la présence ou non de canaux complémentaires d'alimentation en huile du ou des paliers à roulement peut varier suivant les configurations et le dimensionnement de l'assemblage.

Le palier à roulement peut être à billes à contact radial ou à contact oblique. Les chemins de roulement peuvent être en arc de cercle ou en ogive, c'est-à-dire à deux arcs de cercles sécants et non concentriques. Les corps roulants peuvent être des billes, des aiguilles, des rouleaux, cylindriques ou coniques ou des tonnelets. Les corps roulants peuvent être en acier ou en céramique. De même les bagues intérieures et extérieures peuvent être en acier ou en céramique. Dans les modes de réalisation à plusieurs rangées de corps roulants, on peut prévoir des corps roulants de différentes formes, billes et rouleaux par exemple.

L'assemblage visé par l'invention n'est pas limité à un vilebrequin mais peut au contraire être généralisé au guidage en rotation de tout autre type d'arbre par rapport à tout type de carter contenant ou non un lubrifiant, ou plus généralement de bâti ou de support, lubrifié ou non.

Dans tous les modes de réalisation, on peut le cas échéant prévoir un chemisage de la piste de glissement **36,** avec un revêtement améliorant le glissement. De façon alternative ou additionnelle, on peut également prévoir dans tous les modes de réalisation que le manchon soit constitué en deux pièces, à savoir une pièce massive sur laquelle ou dans laquelle est fretté un coussinet situé directement en regard de la piste de glissement **36.**

## Revendications

1. Assemblage de guidage hybride comportant au moins un palier à roulement (20) et au moins un palier lisse (18) définissant un axe de révolution commun (100), le palier à roulement (20) comportant au moins un chemin de roulement intérieur (24, 24A, 24B) tourné radialement vers l'extérieur, au moins un chemin de roulement extérieur (26, 26A, 26B) tourné radialement vers l'intérieur en regard du chemin de roulement intérieur (24, 24A, 24B) et des corps roulants (22, 22A, 22B) circulant sur le chemin de roulement intérieur (24, 24A, 24B) et le chemin de roulement extérieur (26, 26A, 26B), le palier à roulement (20) présentant un jeu résiduel de fonctionnement (JR) fonction d'une température de fonctionnement dans une plage de températures prédéterminée, le palier lisse (18) comportant au moins une piste de glissement (36, 36A, 36B) et au moins un manchon (32, 32A, 32B) situé radialement en regard et à distance de la piste de glissement (36, 36A, 36B) de manière à constituer un jeu fonctionnel (JL) entre la piste de glissement (36, 36A, 36B) et le manchon (32, 32A, 32B) fonction de la température de fonctionnement dans la plage de températures prédéterminée, la piste de glissement (36, 36A, 36B) étant fixe en rotation par rapport à l'un des chemins de roulement intérieur (24, 24A, 24B) ou extérieur (26, 26A, 26B), le manchon (32, 32A, 32B) étant fixe en rotation par rapport à un autre des chemins de roulement intérieur (24, 24A, 24B) ou extérieur (26, 26A, 26B), **caractérisé en ce que** le manchon (32, 32A, 32B) a un coefficient de dilatation radiale thermique tel que la différence algébrique entre le jeu résiduel de fonctionnement (JR) du palier à roulement (20) et le jeu fonctionnel (JL) augmente en passant de valeurs négatives à des valeurs positives lorsque la température de fonctionnement augmente dans la plage de températures prédéterminée.

2. Assemblage de guidage hybride selon la revendication 1, **caractérisé en ce que** le palier à roulement (20) comporte au moins une bague extérieure (28) sur laquelle est formé le chemin de roulement extérieur (26, 26A, 26B).

3. Assemblage de guidage hybride selon la revendication 2, **caractérisé en ce que**

   - le manchon (32, 32A, 32B) est fretté dans la bague extérieure (28), et/ou
   - la bague extérieure forme un épaulement d'arrêt axial du manchon (32, 32A, 32B).

4. Assemblage de guidage hybride selon la revendication 2, **caractérisé en ce que** la piste de glissement (36) est formée sur la bague extérieure (28) et tournée radialement vers l'intérieur.

5. Assemblage de guidage hybride selon l'une quelconque des revendications 2 à 4, **caractérisé en ce que** l'une des conditions suivantes est remplie :

   - sur la bague extérieure (28) est formé un chemin de roulement extérieur additionnel (26B), le manchon étant positionné axialement entre le chemin de roulement extérieur (26A) et le chemin de roulement extérieur additionnel (26B) ;
   - le palier à roulement (20) comporte au moins une bague extérieure additionnelle (28B) sur laquelle est formé un chemin de roulement extérieur additionnel (26B), le manchon étant positionné axialement entre le chemin de roulement extérieur (26A) et le chemin de roulement extérieur additionnel (26B).

6. Assemblage de guidage hybride selon l'une quelconque des revendications précédentes, **caractérisé en ce que** le palier à roulement (20) comporte au moins une bague intérieure (30, 30A, 30B) sur laquelle est formé le chemin de roulement intérieur (24, 24A, 24B) et **en ce que**, de préférence :

   - soit le manchon (32, 32A, 32B) est fretté sur la bague intérieure (30, 30A, 30B), et/ou la bague intérieure forme un épaulement (35) d'arrêt axial du manchon (30, 30A, 30B),
   - soit la piste de glissement (36, 36A, 36B) est formée sur bague intérieure (30) et tournée radialement vers l'extérieur.

7. Assemblage de guidage hybride selon la revendication 6 et l'une quelconque des revendications 2 à 5, **caractérisé en ce que** le chemin de roulement intérieur (24, 24A) est situé en regard du chemin de roulement extérieur (26, 26A).

8. Assemblage de guidage hybride selon l'une quelconque des revendications 6 à 7, **caractérisé en ce qu'**est formé sur la bague intérieure (30) un chemin de roulement intérieur additionnel (24B), le manchon étant positionné axialement entre le chemin de roulement intérieur (24A) et le chemin de roulement intérieur additionnel (24B).

9. Assemblage de guidage hybride selon l'une quelconque des revendications 6 à 7, **caractérisé en ce que** le palier à roulement comporte au moins une bague intérieure additionnelle (30B) sur laquelle est formé un chemin de roulement intérieur additionnel (24B), le manchon étant positionné axialement entre le chemin de roulement intérieur (24A) et le chemin de roulement intérieur additionnel (24B).

10. Assemblage de guidage hybride selon la revendication 8 ou la revendication 9 en combinaison avec la revendication 5, **caractérisé en ce que** le chemin de roulement extérieur additionnel (26B) est situé en regard du chemin de roulement intérieur additionnel (24B).

11. Assemblage de guidage hybride selon l'une quelconque des revendications précédentes, **caractérisé en ce que** le palier lisse (18) comporte au moins deux manchons (32A, 32B) situés axialement de part et d'autre du chemin de roulement extérieur (26) et du chemin de roulement intérieur (24).

12. Assemblage de guidage hybride selon l'une quelconque des revendications précédentes, **caractérisé en ce que** le manchon (32) comporte un anneau de dilatation (32.1) en ayant un coefficient de dilatation thermique supérieur à $18.10^{-6}\,K^{-1}$, de préférence un anneau en alliage léger, de préférence en alliage d'aluminium, et de préférence **en ce que** le manchon (32) comporte un anneau d'armature (32.2) en acier entourant l'anneau de dilatation (32.1).

13. Assemblage de guidage hybride selon l'une quelconque des revendications précédentes, **caractérisé en ce que** le palier lisse (18) comporte une bague de glissement (38) sur laquelle est formée la piste de glissement (36).

14. Ensemble comportant un assemblage de guidage hybride selon l'une quelconque des revendications précédentes, **caractérisé en ce qu'**il comporte en outre un arbre (10) et un bâti (14), le chemin de roulement intérieur (24, 24A, 24B) étant fixe par rapport à l'arbre (10), le chemin de roulement extérieur (26, 26A, 26B) étant fixe par rapport au bâti (14), et, de préférence, **en ce que** la piste de glissement (36) est formée soit sur le bâti (14) et tournée radialement vers l'intérieur, soit sur l'arbre (10) et tournée radialement vers l'extérieur, le bâti (14) étant de préférence un carter renfermant un bain d'huile dans lequel baignent le palier à roulement (20) et le palier lisse (18), et de préférence un échangeur thermique de régulation thermique du bain d'huile.

15. Ensemble selon la revendication 14, **caractérisé en ce que** l'arbre est un vilebrequin (10), et, de préférence, **en ce que** :

   - le vilebrequin (10) comporte au moins deux manivelles adjacentes (110), le palier à roulement (20) et le palier lisse (18) étant positionnés entre les deux manivelles adjacentes (110), ou
   - le vilebrequin comporte des manivelles (110), le palier à roulement (20) et le palier lisse (18) étant positionnés à une extrémité du vilebrequin (10), d'un même côté des manivelles (110).

**Patentansprüche**

1. Anordnung einer Hybridführung, welche mindestens ein Wälzlager (20) und mindestens ein Gleitlager (18) umfasst, welche eine gemeinsame Drehachse (100) abgrenzen, wobei das Wälzlager (20) mindestens eine innere, radial nach außen gedrehte Laufbahn (24, 24A, 24B), mindestens eine äußere, radial nach innen gedrehte Laufbahn (26, 26A, 26B) gegenüber der inneren Laufbahn (24, 24A, 24B) und Rollkörper (22, 22A, 22B) umfasst, die auf der inneren Laufbahn (24, 24A, 24B) und der äußeren Laufbahn (26, 26A, 26B) laufen, wobei das Wälzlager (20) ein verbleibendes Betriebsspiel (JR) aufweist, das von einer Betriebstemperatur in einem bestimmten Temperaturbereich abhängt, wobei das Gleitlager (18) mindestens eine Gleitbahn (36, 36A, 36B) und mindestens eine radial gegenüber der Gleitbahn (36, 36A, 30B) befindliche und zu ihr beabstandete Hülse umfasst, so dass ein Betriebsspiel (JL) zwischen der Gleitbahn (36, 36A, 36B) und der Hülse (32, 32A, 32B) in Abhängigkeit von der Betriebstemperatur im vorgegebenen Temperaturbereich entsteht, wobei die Gleitbahn (36, 36A, 36B) in Bezug auf die innere Laufbahn (24, 24A, 24B) oder die äußere Laufbahn (26, 26A, 26B) drehfest ist, wobei die Hülse (32, 32A, 32B) in Bezug auf die innere Laufbahn (24, 24A, 24B) oder die äußere Laufbahn (26, 26A, 26B) drehfest ist, **dadurch gekennzeichnet, dass** der radiale Wärmeausdehnungskoeffizient der Hülse (32, 32A, 32B) dergestalt ist, dass die algebraische Differenz zwischen dem verbleibenden Betriebsspiel (JR) des Wälzlagers (20) und dem Betriebsspiel (JL) zunimmt und von negativen Werten zu positiven Werten wechselt, wenn die Betriebstemperatur in dem vorgegebenen Temperaturbereich ansteigt.

2. Anordnung einer Hybridführung nach Anspruch 1, **dadurch gekennzeichnet, dass** das Wälzlager (20) mindestens einen Außenring (28) umfasst, auf dem die äußere Laufbahn (26, 26A, 26B) geformt ist.

3. Anordnung einer Hybridführung nach Anspruch 2, **dadurch gekennzeichnet, dass**

   - die Hülse (32, 32A, 32B) in den Außenring (28) geschrumpft ist und/oder
   - der Außenring eine Schulter für den axialen Anschlag der Hülse (32, 32A, 32B) bildet.

4. Anordnung einer Hybridführung nach Anspruch 2, **dadurch gekennzeichnet, dass** die Gleitbahn (36) auf dem Außenring (28) gebildet wird und radial nach innen gedreht ist.

5. Anordnung einer Hybridführung nach einem der Ansprüche 2 bis 4, **dadurch gekennzeichnet, dass** eine der folgenden Bedingungen erfüllt ist:

   - auf dem Außenring (28) ist eine zusätzliche äußere Laufbahn (26B) geformt, wobei die Hülse axial zwischen der äußeren Laufbahn (26A) und der zusätzlichen äußeren Laufbahn (26B) positioniert wird;
   - das Wälzlager (20) umfasst mindestens einen zusätzlichen Außenring (28B), auf dem eine zusätzliche äußere Laufbahn (26B) gebildet wird, wobei die Hülse axial zwischen der äußeren Laufbahn (26A) und der zusätzlichen äußeren Laufbahn (26B) positioniert wird.

6. Anordnung einer Hybridführung nach einem der vorhergehenden Ansprüche, **dadurch gekennzeichnet, dass** das Wälzlager (20) mindestens einen Innenring (30, 30A, 30B) umfasst, auf dem die innere Laufbahn (24, 24A, 24B) geformt ist, und dadurch, dass vorzugsweise:

   - entweder die Hülse (32, 32A, 32B) auf den Innenring (30, 30A, 30B) geschrumpft ist, und/oder der Innenring eine Schulter (35) für den axialen Anschlag der Hülse (30, 30A, 30B) bildet,
   - oder die Gleitbahn (36, 36A, 36B) auf den Innenring (30) geformt wird und radial nach außen gedreht ist.

7. Anordnung einer Hybridführung nach Anspruch 6 und einen der Ansprüche 2 bis 5, **dadurch gekennzeichnet, dass** die innere Laufbahn (24, 24A) gegenüber der äußeren Laufbahn (26, 26A) liegt.

8. Anordnung einer Hybridführung nach einem der Ansprüche 6 bis 7, **dadurch gekennzeichnet, dass** auf dem Innenring (30) eine zusätzliche innere Laufbahn (24B) geformt wird, wobei die Hülse axial zwischen der inneren Laufbahn (24A) und der zusätzlichen inneren Laufbahn (94 B) positioniert ist.

9. Anordnung einer Hybridführung nach einem der Ansprüche 6 bis 7, **dadurch gekennzeichnet, dass** das Wälzlager mindestens einen zusätzlichen Innenring (30B) umfasst, auf dem eine zusätzliche innere Laufbahn (24B) geformt ist, wobei die Hülse axial zwischen der inneren Laufbahn (24A) und der zusätzlichen inneren Laufbahn (24B) positioniert ist.

10. Anordnung einer Hybridführung nach Anspruch 8 oder Anspruch 9 in Kombination mit Anspruch 5, **dadurch gekennzeichnet, dass** die zusätzliche äußere Laufbahn (26B) gegenüber der zusätzlichen inneren Laufbahn (24B) liegt.

11. Anordnung einer Hybridführung nach einem der vorhergehenden Ansprüche, **dadurch gekennzeichnet, dass** das Gleitlager (18) mindestens zwei Hülsen (32A, 32B) axial zu beiden Seiten der äußeren Laufbahn (26) und der inneren Laufbahn (24) umfasst.

12. Anordnung einer Hybridführung nach einem der vorhergehenden Ansprüche, **dadurch gekennzeichnet, dass** die Hülse (32) einen Dehnungsring (32.1) mit einem Wärmedehnungskoeffizienten größer $18.10^{-6}\ K^{-1}$, vorzugsweise einen Ring aus Leichtlegierung, vorzugsweise aus Aluminiumlegierung umfasst, und dadurch, dass vorzugswiese der Dehnungsring (32.1) der Hülse von einem Armierungsring (32.2) umgeben ist.

13. Anordnung einer Hybridführung nach einem der vorhergehenden Ansprüche, **dadurch gekennzeichnet, dass** das Gleitlager (18) einen Gleitring (38) umfasst, auf dem die Gleitbahn (36) geformt ist.

14. Einheit mit einer Anordnung einer Hybridführung nach einem der vorhergehenden Ansprüche, **dadurch gekennzeichnet, dass** sie des Weiteren eine Welle (10) und einen Rahmen (14) umfasst, wobei die innere Laufbahn (24, 24A, 24B) in Bezug auf die Welle (10) feststehend ist, die äußere Laufbahn (26, 26A, 26B) in Bezug auf den Rahmen (14) feststehend ist und vorzugsweise die Gleitbahn (36) entweder auf dem Rahmen (14) radial nach innen gedreht, oder auf der Welle (10) radial nach außen gedreht geformt ist, wobei der Rahmen (14) vorzugsweise ein Gehäuse ist, welches ein Ölbad umschließt, in welchem das Wälzlager (20) und das Gleitlager (18) eingetaucht sind, und vorzugsweise einen Wärmetauscher mit thermischer Regulierung des Ölbads.

15. Einheit nach Anspruch 14, **dadurch gekennzeichnet, dass** die Welle eine Kurbelwelle (10) ist, und vorzugsweise dadurch, dass:

- die Kurbelwelle (10) mindestens drei nebeneinanderliegende Kurbeln (110) umfasst, wobei das Wälzlager (20) und das Gleitlager (18) zwischen den beiden nebeneinanderliegenden Kurbeln (110) positioniert sind, oder
- die Kurbelwelle Kurbeln (110) umfasst, wobei das Wälzlager (20) und das Gleitlager (18) an einem Ende der Kurbelwelle (10) an ein und derselben Seite der Kurbeln (110) positioniert sind.

**Claims**

1. Hybrid guide assembly comprising at least one ball bearing (20) and at least one plain bearing (18) defining a common axis of rotation (100), wherein the ball bearing (20) comprises at last one inner bearing race (24, 24A, 24B) turned radially outwards, at least one outer bearing race (26, 26A, 26B) turned radially inwards opposite the inner bearing race (24, 24A, 24B) and rolling bodies (22, 22A, 22B) travelling on the inner bearing race (24, 24A, 24B) and the outer bearing race (26, 26A, 26B), with the ball bearing (20) having a residual running clearance (JR) as a function of a running temperature within a predetermined range of temperatures, the plain bearing (18) comprising at least one slide surface (36, 36A, 36B) and at least one sleeve (32, 32A, 32B), located radially opposite and at an interval from the slide surface (36, 36A, 36B) so as to form a running clearance (JL) between the slide surface (36, 36A, 36B) and the sleeve (32, 32A, 32B) as a function of the running temperature within the predetermined range of temperatures, the slide surface (36, 36A, 36B) being rotationally fixed in relation to one of the inner bearing races (24, 24A, 24B) or outer bearing races (26, 26A, 26B), the sleeve (32, 32A, 32B) being rotationally fixed in relation to another of the inner bearing races (24, 24A, 24B) or outer bearing races (26, 26A, 26B), **characterised in that** the sleeve (32, 32A, 32B) has a thermal radial expansion coefficient such that the algebraic difference between the residual running clearance of the ball bearing (20) and the running clearance (JL) increases by changing from negative values to positive values when the running temperature increases within the predetermined range of operating temperatures.

2. Hybrid guide assembly according to claim 1, **characterised in that** the ball bearing (20) comprises at least one outer ring (28) on which the outer bearing race (26, 26A, 26B) is formed.

3. Hybrid guide assembly according to claim 2, **characterised in that**

- the sleeve (32, 32A, 32B) is shrunk-fit in the outer ring (28), and/or
- the outer ring forms an axial stop shoulder arresting the sleeve (32, 32A, 32B).

4. Hybrid guide assembly according to claim 2, **characterised in that** the slide surface (36) is formed on the outer ring (28) and is turned radially inwards.

5. Hybrid guide assembly according to any one of claims 2 to 4, **characterised in that** one of the following conditions is fulfilled:

- an additional outer bearing race (26B) is formed on the outer ring (28), with the sleeve being positioned axially between the outer bearing race (26A) and the additional outer bearing race (26B);
- the ball bearing (20) comprises at least one additional outer bearing ring (28B), on which an additional outer bearing race (26B) is formed, with the sleeve being positioned axially between the outer bearing race (26A) and the additional outer bearing race (26B).

6. Hybrid guide assembly according to any one of the preceding claims, **characterised in that** the ball bearing (20) comprises at least one inner ring (30, 30A, 30B) on which the inner bearing race (24, 24A, 24B) is formed and **in that**, preferably:

- either the sleeve (32, 32A, 32B) is shrunk-fit on the inner ring (30, 30A, 30B), and/or the inner ring forms an axial stop shoulder (35) for arresting the sleeve (30, 30A, 30B),
- or the slide surface (36, 36A, 36B) is formed on the inner ring (30) and is turned radially outwards.

7. Hybrid guide assembly according to claim 6 and any one of claims 2 to 5, **characterised in that** the inner bearing race (24, 24A) is located opposite the outer bearing race (26, 26A).

8. Hybrid guide assembly according to any one of claims 6 to 7, **characterised in that** an additional bearing race (24B) is formed on the inner ring (30), with the sleeve being positioned axially between the inner bearing race (24A) and the additional inner bearing race (24B).

9. Hybrid guide assembly according to any one of claims 6 to 7, **characterised in that** the ball bearing furthermore comprises at least one additional inner ring (30B) on which an additional inner bearing race (24B) is formed, with the sleeve being positioned axially between the inner bearing race (24A) and the additional inner bearing race (24B).

10. Hybrid guide assembly according to claim 8 or claim 9 in combination with claim 5, **characterised in that** the additional outer bearing race (26B) is located opposite the additional inner bearing race (24B).

11. Hybrid guide assembly according to any one of the preceding claims, **characterised in that** the plain bearing (18) comprises at least two sleeves (32A, 32B) located axially on either side of the outer bearing race (26) and the inner bearing race (24).

12. Hybrid guide assembly according to any one of the preceding claims, **characterised in that** the sleeve (32) comprises an expansion ring (32.1) having a thermal expansion coefficient of more than 18.10-6 K-1, preferably a ring made of light alloy, preferably aluminium alloy, and preferably **in that** the sleeve (32) comprises a reinforcing ring (32.2) made of steel surrounding the expansion ring (32.1).

13. Hybrid guide assembly according to any one of the preceding claims, **characterised in that** the plain bearing (18) comprises a slide ring (38) on which the slide surface (36) is formed.

14. System comprising a hybrid guide assembly according to any one of the preceding claims, **characterised in that** it furthermore comprises a shaft (10) and a frame (14), wherein the inner bearing race (24, 24A, 24B) is fixed in relation to the shaft (10), the outer bearing race (26, 26A, 26B) is fixed in relation to the frame (14) and, preferably, **in that** the slide surface (36) is formed either on the frame (14) turned radially inwards, or on the shaft (10) turned radially outwards, with the frame (14) preferably being a casing enclosing an oil bath in which the ball bearing (20) and the plain bearing (18) are immersed, and preferably a heat exchanger for heat regulation of the water bath.

15. System according to claim 14, **characterised in that** the shaft is a crankshaft (10) and, preferably, **in that**:

> - the crankshaft (10) comprises at least two adjacent cranks (110), with the ball bearing (20) and the plain bearing (18) being positioned between the two adjacent cranks (110), or
> - the crankshaft comprises cranks (110), with the ball bearing (20) and the plain bearing (18) being positioned at an end of the crankshaft (10), on a same side of the cranks (110).

# Fig.1

# Fig.2

# Fig.3

# Fig.4

# Fig.5

# Fig.6

32

37

36

12

14

100

10

30

24

22

26

28

20
18 } 16

EP 3 268 626 B1

Fig.7

20

Fig.8

# Fig.9

# Fig.10

# Fig.11

**EP 3 268 626 B1**

## RÉFÉRENCES CITÉES DANS LA DESCRIPTION

**Documents brevets cités dans la description**

- JP 2009019728 B